(19) Europäisches Patentamt
European Patent Office
Office européen des brevets

(11) EP 4 427 923 B1

(12) **EUROPEAN PATENT SPECIFICATION**

(45) Date of publication and mention of the grant of the patent:
**06.05.2026 Bulletin 2026/19**

(21) Application number: **23160379.6**

(22) Date of filing: **07.03.2023**

(51) International Patent Classification (IPC):
***B32B 7/023*** *(2019.01)* ***B32B 7/027*** *(2019.01)*
***B32B 7/12*** *(2006.01)* ***B32B 27/08*** *(2006.01)*
***B32B 27/30*** *(2006.01)* ***B32B 27/32*** *(2006.01)*
***C08J 5/18*** *(2006.01)* ***C08L 23/04*** *(2006.01)*

(52) Cooperative Patent Classification (CPC):
**B32B 7/12; B32B 7/023; B32B 7/027; B32B 27/08; B32B 27/30; B32B 27/327; C08J 5/18; C08L 23/04;**
B32B 2250/03; B32B 2250/24; B32B 2250/242; B32B 2250/40; B32B 2270/00; B32B 2307/30; B32B 2307/31; (Cont.)

(54) **BIAXIALLY ORIENTED POLYPROPYLENE-BASED MULTILAYER FILM**
BIAXIAL ORIENTIERTE MEHRSCHICHTFOLIE AUF POLYPROPYLENBASIS
FILM MULTICOUCHE À BASE DE POLYPROPYLÈNE À ORIENTATION BIAXIALE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**11.09.2024 Bulletin 2024/37**

(73) Proprietor: **Borealis GmbH**
**1020 Vienna (AT)**

(72) Inventors:
- **WANG, Jingbo**
**4021 Linz (AT)**
- **FAWAZ, Joel**
**4021 Linz (AT)**
- **GAHLEITNER, Markus**
**4021 Linz (AT)**
- **BERNREITNER, Klaus**
**4021 Linz (AT)**
- **NIEDERSUESS, Peter**
**4021 Linz (AT)**
- **ORTNER, Stefan**
**4021 Linz (AT)**

(74) Representative: **Maiwald GmbH**
**Elisenhof**
**Elisenstraße 3**
**80335 München (DE)**

(56) References cited:
**EP-A1- 4 036 129**
**WO-A1-2021/110615**
**WO-A1-2022/207737**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B32B 2307/40; B32B 2307/408; B32B 2307/518;
B32B 2307/54; B32B 2307/546; B32B 2307/558;
B32B 2307/7166; B32B 2307/72; B32B 2307/7376;
B32B 2439/70; B32B 2571/00

## Description

The present invention relates to a polypropylene-based multilayer film, which is biaxially oriented, a process for manufacturing the biaxially oriented multilayer film and to its use in flexible packaging.

Polypropylene-based resins have been widely used in the food packaging field because they have excellent tensile strength, rigidity, transparency and the like, and are additionally advantageous due to their non-toxicity and odorlessness. Generally, they are used in the form of cast films (CPP), biaxially oriented films (BOPP) or water-quenched tubular films (TQPP). Biaxially oriented polypropylene (BOPP) films are films stretched in both machine and transverse directions, producing molecular chain orientation in two directions.

Biaxially oriented polypropylene-based (BOPP) multilayer films are commonly used in packaging industry, including food packaging.

Typically, this application comprises a sealing layer, which provides the necessary sealing performance for hermetically closing a packaging system. However, such a sealing layer is directly in contact with the food packed, therefore the cleanness, e.g. the low content of extractables, is very important.

Films for food packaging are typically transparent, or, more general, shall furthermore have good optical properties, like low haze to provide an attractive appearance.

Polypropylenes according to state of art technology are based on the Ziegler-Natta type catalyst technology, i.e. titanium-centred heterogeneous catalysts with aluminium alkyl activation. Thus, the sealing layer is typically a Ziegler-Natta catalysed propylene - ethylene - butene terpolymer.

WO 2009/019169 A1, for example, describes a process for providing Ziegler-Natta derived PP terpolymers suitable for blown film comprising at least 8 wt.-% of total comonomer units with the comonomer units being derived from ethylene and C4 to C8 alpha olefins by way of using 1,3-diether internal donor catalyst. According to WO 2009/019169 A1, an optimal balance of properties shall be observed when an ethylene content of lower than 2.5 wt.-% is combined with a butene-1 content of higher than 10 wt.-%, whereby alternatively when ethylene content is higher than 2.5 wt.-%, butene content should be lower than 10 wt.-%. A composition having an ethylene content of 1.2 wt.-% and 11.3 wt.-% butene, i.e. a C4/C2 (wt/wt) ratio of 9.4 resulted in a SIT of 107.4 °C and 0.2 % haze (1mm plaque)

In the last decades this solution served the needs sufficiently. Due to the change of market requirements, such terpolymers have however somehow reached their limit, e.g. the sealing initiation temperature is not low enough, optics are not as good as required.

Metallocene catalyst derived PP terpolymers have also already been described for sealing applications.

For instance, EP 20193414 A discloses bimodal C2C3C4 terpolymers made by polymerization in a loop reactor, followed by a gas phase reactor in the presence of a metallocene catalyst. The terpolymers were used to make cast films after their $MFR_2$ (ISO1133, 2.16 kg, 230 °C) of 2.0 g/10 min reached after polymerization has been adjusted by visbreaking to a final $MFR_2$ (ISO1133, 2.16 kg, 230 °C) in the range of 11.0 to 14.0 g/10 min.

BOPP films are in principle mentioned, but not demonstrated.

WO 2022167368 A discloses films made from a blend of a C2C3C4 terpolymer and a C3C4 random copolymer upgrading resin.

The C2C3C4 terpolymers is made by polymerization in a loop reactor, followed by a gas phase reactor in the presence of a metallocene catalyst, whereby a quite high amount of polymer was produced in the gas phase reactor, i.e. 59.0 wt.-%, related to the final polymer.

According to claim 1 the terpolymer can have a xylene cold soluble (XCS) content in the range of 5.0 to 25.0 wt.-%, preferably 15.0 to 19.0 wt.-% determined at 25 °C according ISO 16152. The terpolymer used in the Examples has a quite high amount of xylene cold soluble (XCS) fraction of 17.1 wt.-%.

EP 1358252 B1 (Basell) claims a bioriented polypropylene film (BOPP) wherein at least one layer comprises a propylene random copolymer containing at least 0.8% by weight of ethylene or a propylene polymer composition comprising a propylene random copolymer containing at least 0.8% by weight of one or more comonomers selected from ethylene and C4 -C10 $\alpha$-olefins, said random copolymer or polymer composition having the following features: (1) a melting temperature of 155 °C or higher measured by DSC with a temperature variation of 20°C per minute; (2) a content of fraction soluble in xylene at room temperature (at 25 °C) lower than 3% by weight, and a value of the ratio of the polymer fraction collected by TREF method disclosed in the characterization section in the temperature range from 25°C to 95°C to the fraction soluble in xylene at room temperature higher than 8 wt.-%/wt.-%; and (3) a Melt Flow Rate (230°C, 2.16 Kg load) from 1 to 10 g/10min.

Sealing related properties are not mentioned. WO 2021110615 relates to multilayer films comprising a seal layer and WO 2022207737 relates to BOPP multilayer films.

As mentioned above, BOPP multilayer films are widely used in packaging. The key requirements are sealing properties and low extractable content.

Thus, there is still the need for BOPP multilayer films having a very good sealing behaviour and low extractable content.

Therefore, it was one objective of the present invention to provide a new type of BOPP multilayer films with improved sealing properties, like low sealing initiation temperature (SIT) and broad processing window, in view of the difference between melting temperature of the metallocene catalysed ethylene-propylene-1-butene terpolymer base resin and the sealing initiation temperature of the BOPP multilayer film.

Another problem is the recycling of BOPP multilayer films after their first use. It is much more challenging to recycle BOPP multilayer films made of different materials, e.g. different kinds of polymers, like e.g. polyamide or polyester and polypropylene, than to recycle mono-material solutions. On the other hand, the use of different materials often is necessary to obtain acceptable properties, like sealing properties and mechanical properties. Therefore, another objective of the present invention is the provision of a polypropylene based mono-material solution, which shows a good sealing behaviour.

The present invention is therefore related to a biaxially oriented polypropylene-based multilayer film comprising at least a core layer (CL), a first outer layer (OL1) and a second outer layer (OL2), wherein,

the first and the second outer layers (OL1) and (OL2) comprise
70.0 to 100.0 wt.-%, based on the total weight of the respective outer layer, of a metallocene catalysed ethylene-propylene-1-butene terpolymer base (mC2C3C4) resin having

- an ethylene (C2) content measured by $^{13}$C-NMR analysis (as described in the experimental part) in the range of 0.7 to 2.0 wt.-% with respect to the total weight of the mC2C3C4 base resin;
- a 1-butene (C4) content measured by $^{13}$C-NMR analysis (as described in the experimental part) in the range of 4.0 to 7.8 wt.-% with respect to the total weight of the mC2C3C4 base resin;
- a propylene (C3) content measured by $^{13}$C-NMR analysis (as described in the experimental part) in the range of 90.2 to 96.0 wt.-% with respect to the total weight of the mC2C3C4 base resin;

whereby the units derived from ethylene, propylene and butene add up to 100 wt.-%, and

- a melt flow rate $MFR_2$ (230°C / 2.16 kg) measured according to ISO 1133 in the range from 3.0 to 10.0 g/10 min;
- a xylene cold soluble (XCS) content in the range of 2.0 to 5.0 wt.-%, determined at 25°C according ISO 16152, based on the weight of the mC2C3C4 base resin;
- a melting temperature $T_m$ as determined by DSC according to ISO 11357 in the range from 120 to 129 °C;
- a crystallization temperature $T_c$ as determined by DSC according to ISO 11357 in the range from 80 to 110 °C and
- a number of 2,1 regio-defects measured by $^{13}$C-NMR analysis (as described in the experimental part) in the range of 0.10 to 1.5 mol-% and

whereby the mC2C3C4 consists of

(i) 30.0 to 60.0 wt.-%, based on the total weight of the mC2C3C4, of a first polymer component (TERPO-1) having

- a melt flow rate $MFR_2$ (230°C / 2.16 kg) measured according to ISO 1133 in the range from 1.0 to 10.0 g/10 min;
- an ethylene (C2) content measured by $^{13}$C-NMR analysis (as described in the experimental part) in the range of 0.7 to 1.3 wt.-% with respect to the total weight of the first polymer component (TERPO-1) and
- a 1-butene (C4) content measured by $^{13}$C-NMR analysis (as described in the experimental part) in the range of 4.0 to 6.0 wt.-% with respect to the total weight of the first polymer component (TERPO-1); and

(ii) 40.0 to 70.0 wt.-% based on the total weight of the ethylene-propylene-1-butene terpolymer, of a second polymer component (TERPO-2) having

- a melt flow rate $MFR_2$ (230°C / 2.16 kg) measured according to ISO 1133 in the range from 10.0 to 20.0 g/10 min;
- an ethylene (C2) content measured by $^{13}$C-NMR analysis (as described in the experimental part) in the range of 1.3 to 2.0 wt.-% with respect to the total weight of the second polymer component (TERPO-2) and
- a 1-butene (C4) content measured by $^{13}$C-NMR analysis (as described in the experimental part) in the range of 6.0 to 10.0 wt.-% with respect to the total weight of the second polymer component (TERPO-2) and

(iii) optionally one or more additives, selected from the group consisting of slip agents, anti-block agents, UV stabilizers, antistatic agents, alpha-nucleating agents, antioxidants and mixtures thereof;

whereby the core layer (CL) is a polypropylene-based layer and
whereby the biaxially oriented polypropylene-based multilayer film has a sealing initiation temperature measured on a 25μm biaxially oriented test cast film as described in the experimental part in the range of 80 to 105 °C.

Unexpectedly, the biaxially oriented polypropylene-based multilayer film of the invention provides improved sealing properties, such as especially low sealing initiation temperature (SIT) and wide processing temperature range.

*Definitions*

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Metallocene catalysed ethylene-propylene-1-butene terpolymer (mC2C3C4) base resin is defined in this invention as ethylene-propylene-1-butene terpolymer base resin, which has been produced in the presence of a metallocene catalyst.

The "terpolymer" according to the present invention denotes a polymer made of the monomers ethylene, propylene and 1-butene, whereby these monomers can be found in the polymer chain. The weight-content of units originating from these monomers adds up to 100 wt.-%. Pseudo terpolymers being made from mixtures of two copolymers do not subsume under the term "terpolymer" according to the present invention. Pseudo terpolymers can be recognized by coupled TREF-IR, coupled TREF-NMR or similar methods. As a matter of definition, a terpolymer according to the present invention is not a mixture of two copolymers.

Polypropylene-based layer is defined in this invention as layer, which is made of polypropylene polymers only, i.e. polymers other than polypropylenes are substantially absent, thus polymers other than polypropylenes are present in an amount of below 5.0 wt.-%, preferably below 3.0 wt.-% and more preferably below 2.0 wt.-%.

Regio-defects

The regio-defects of propylene polymers can be of three different types, namely 2,1-erythro (2,le), 2,1-threo (2,lt) and 3,1 defects. A detailed description of the structure and mechanism of formation of regio-defects in polypropylene can be found in Chemical Reviews 2000, 100(4), pages 1316 to 1327. These defects are measured using $^{13}C$ NMR as described in more detail below.

The term "2,1 regio-defects" as used in the present invention defines the sum of 2,1-erythro regio-defects and 2,1-threo regio-defects. Propylene random copolymers or polypropylene homopolymers having a number of regio-defects as required in the propylene composition of the invention are usually and preferably prepared in the presence of a single-site catalyst.

The catalyst influences in particular the microstructure of the polymer. Accordingly, polypropylenes prepared by using a metallocene catalyst provide a different microstructure compared to those prepared by using Ziegler- Natta (ZN) catalysts. The most significant difference is the presence of regio-defects in metallocene-made polypropylenes, which is not the case for polypropylenes made by Ziegler-Natta (ZN) catalysts.

It is also understood within the meaning of this disclosure that the below described embodiments may be combined.

**Detailed description**

*Outer layers (OL 1, OL2)*

According to the present invention, the multilayer film comprises a first and a second outer layer (OL1) and (OL2), which comprise 70.0 to 100.0 wt.-%, preferably 80.0 to 100.0 wt.-%, based on the respective outer layer, of a metallocene catalysed ethylene-propylene-1-butene terpolymer (mC2C3C4) base resin.

A possible modifier for said outer layers is a propylene-1-butene random copolymer characterized by a melting temperature Tm measured by differential scanning calorimetry (DSC) in the range from 70 to 90 °C, a 1-butene content measured by $^{13}C$-NMR analysis (as described in the experimental part) in an amount of 20.0 to 35.0 wt.-% with respect the

total propylene-1-butene random copolymer, whereby the units derived from propylene and 1-butene add up to 100 wt.-%, and a melt flow rate $MFR_2$ (230 °C / 2.16 kg) measured according to ISO 1133 in the range of 1.0 to 18.0 g/10 min.

A further suitable modifier is a propylene-ethylene random copolymer having an ethylene content measured by $^{13}C$-NMR analysis in an amount of 1.0 to 25.0 wt.-% with respect the total propylene-ethylene random copolymer, and a melt flow rate $MFR_2$ (230 °C / 2.16 kg) measured according to ISO 1133 in the range of 1.0 to 300.0 g/10 min.

Said modifier may be comprised in an amount of up to 30.0 wt.-%, preferably up to 20.0 wt.- %.

More preferably the outer layers (OL1) and (OL2) consist of the metallocene catalysed ethylene-propylene-1-butene terpolymer (mC2C3C4) base resin.

*Metallocene catalysed ethylene-propylene-1-butene terpolymer base resin*

The metallocene catalysed ethylene-propylene-1-butene terpolymer (mC2C3C4) base resin is characterized by the following properties:

- an ethylene (C2) content measured by $^{13}C$-NMR analysis (as described in the experimental part) in the range of 0.7 to 2.0 wt.-% with respect the total weight of the mC2C3C4 base resin;
- a 1-butene (C4) content measured by $^{13}C$-NMR analysis (as described in the experimental part) in the range of 4.0 to 7.8 wt.-% with respect the total weight of the mC2C3C4 base resin;
- a propylene (C3) content measured by $^{13}C$-NMR analysis (as described in the experimental part) in the range of 90.2 to 96.0 wt.-% with respect the total weight of the mC2C3C4 base resin;

whereby the units derived from ethylene, propylene and butene add up to 100 wt.-%, and

- a melt flow rate $MFR_2$ (230 °C / 2.16 kg) measured according to ISO 1133 in the range from 3.0 to 10.0 g/10min;
- a xylene cold soluble (XCS) content in the range of 2.0 to 5.0 wt.-%, determined at 25 °C according ISO 16152, based on the weight of the mC2C3C4 base resin;
- a melting temperature $T_m$ as determined by DSC according to ISO 11357 in the range from 120 to 129 °C;
- a crystallization temperature $T_c$ as determined by DSC according to ISO 11357 in the range from 80 to 110 °C and
- a number of 2,1 regio-defects measured by $^{13}C$-NMR analysis (as described in the experimental part) in the range of 0.10 to 1.5 mol-%.

The ethylene (C2) content of the mC2C3C4 base resin is preferably in the range of 0.8 to 1.9 wt.-%, more preferably 0.9 to 1.8 wt.-% and even more preferably 1.0 to 1.8 wt.-%, with respect to the total weight of the mC2C3C4 base resin.

The 1-butene (C4) content of the mC2C3C4 base resin is preferably in the range of 4.1 to 7.7 wt.-%, more preferably 4.2 to 7.6 wt.-%, with respect to the total weight of the mC2C3C4 base resin.

The melt flow rate $MFR_2$ (230 °C / 2.16 kg) measured according to ISO 1133 is preferably in the range of 4.5 to 9.5 g/10min, more preferably 5.0 to 9.0 g/10 min and even more preferably 5.5 to 8.5 g/ 10 min.

The xylene cold soluble (XCS) content as determined according to ISO 16152 is preferably in the range of 2.5 to 4.8 wt.-%, more preferably from 2.8 to 4.5 wt.-%, based on the weight of the mC2C3C4 base resin.

The melting temperature $T_m$ as determined by DSC according to ISO 11357 is preferably in the range of 122 to 128 °C.

The crystallization temperature $T_c$ as determined by DSC according to ISO 11357 is preferably in the range of 82 to 105 °C, more preferably 85 to 100 °C and even more preferably 86 to 90°C.

The number of 2,1 regio-defects measured by $^{13}C$-NMR analysis (as described in the experimental part) is preferably in the range of 0.15 to 0.90 mol-%, more preferably of 0.20 to 0.60 mol-%.

According to the present invention the mC2C3C4 base resin comprises two polymer fractions (TERPO-1) and (TERPO-2) whereby the fraction (TERPO-1) is present in an amount of from 30.0 to 60.0 wt.-%, preferably from 40.0 to 58.0 wt.-% and more preferably from 45.0 to 55.0 wt.-%, based on the total weight of the mC2C3C4 base resin, and the fraction (TERPO-2) is thus present in an amount of from 70.0 to 40.0 wt.-%, and preferably from 60.0 to 42.0 wt.-% and more preferably from 55.0 to 45.0 wt.-%, based on the total weight of the mC2C3C4 base resin.

Optionally, a small fraction of prepolymer, usually below 5.0 wt.-%, preferably below 2.0 wt.- %, based on the total weight of the mC2C3C4 base resin, may also be present in the mC2C3C4 base resin. Such prepolymer fraction, if present usually counts to the amount of fraction (TERPO-1).

In addition, the mC2C3C4 base resin can optionally include one or more additives, based on the total weight of the ethylene-propylene-1-butene terpolymer, selected from the group consisting of slip agents, anti-block agents, UV stabilizers, antistatic agents, alpha-nucleating agents, antioxidants and mixtures thereof.

The one or more usual additives are preferably present in the mC2C3C4 base resin in a total amount of from 0.01

up to 5.0 wt.-%, more preferably from 0.05 to 3.0 wt.-% based on the total weight of the mC2C3C4 base resin.

Preferably, at least an antioxidant is added to the mC2C3C4 base resin of the invention.

The amount of (i) (TERPO-1), (ii) (TERPO-2) and (iii) optional additives sum up to 100.0 wt.- %.

Fraction (TERPO-1) of the mC2C3C4 base resin has an ethylene content in the range of 0.7 to 1.3 wt.-%, preferably of 0.7 to 1.2 wt.-% and more preferably of 0.8 to 1.2 wt.-%, and fraction (TERPO-2) has an ethylene content in the range of 1.3 to 2.0 wt.-%, preferably of 1.3 to 1.9 wt.-% and more preferably of 1.4 to 1.9 wt.-%.

The ethylene content of fraction (TERPO-1) is preferably lower than the ethylene content of fraction (TERPO-2).

The 1-butene content of fraction (TERPO-1) of the mC2C3C4 base resin is in the range of 4.0 to 6.0 wt.-%, preferably 4.1 to 6.0 wt.-% and more preferably 4.1 to 5.9 wt.-% and the fraction (TERPO-2) has an 1-butene content in the range of 6.0 to 10.0 wt.-%, preferably of 6.5 to 9.5 wt.-% and more preferably of 7.0 to 9.0 wt.-%.

The 1-butene content of fraction (TERPO-1) is lower than the ethylene content of fraction (TERPO-2).

The melt flow rate MFR2 (230 °C / 2.16 kg) measured according to ISO 1133 of fraction (TERPO-1) is in the range of 1.0 to 10.0 g/10 min, preferably in the range of 2.0 to 9.5 g/10min, more preferably 2.5 to 9.0 g/19 min.

The melt flow rate MFR2 (230 °C / 2.16 kg) measured according to ISO 1133 of fraction (TERPO-2) is in the range of 10.0 to 20.0 g/10 min, preferably in the range of 10.5 to 19.0 g/10min, more preferably 11.0 to 18.0 g/19 min.

The $MFR_2$ of fraction (TERPO-1) is lower than the $MFR_2$ of fraction (TERPO-2).

Another preferred embodiment of the present invention stipules that the mC2C3C4 base resin is produced in the presence of a metallocene catalyst, which is preferably a metallocene catalyst comprising a complex in any one of the embodiments as described in WO 2013/007650 A1, WO 2015/158790 A2, WO 2018/122134 A1 or WO2019/179959. Preferred complexes for the preparation of the mC2C3C4 base resin are for example described in WO 2019179959.

More preferred complexes are of formula (I)

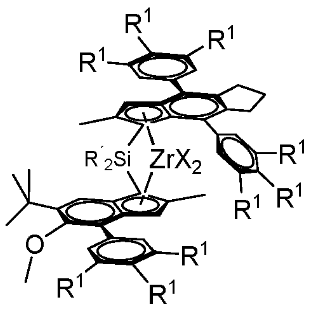

wherein each $R^1$ are independently the same or can be different and are hydrogen or a linear or branched $C_1$-$C_6$-alkyl group, whereby at least on $R^1$ per phenyl group is not hydrogen,
R' is a $C_{1-10}$ hydrocarbyl group, preferably a $C_{1-4}$ hydrocarbyl group and more preferably a methyl group and
X independently is a hydrogen atom, a halogen atom, $C_{1-6}$ alkoxy group, $C_{1-6}$ alkyl group, phenyl or benzyl group.

Most preferably, X is chlorine, benzyl or a methyl group. Preferably, both X groups are the same. The most preferred options are two chlorides, two methyl or two benzyl groups, especially two chlorides.

Specific preferred metallocene catalyst complexes of the invention include: rac-anti-dimethylsilanediyl[2-methyl-4,8-bis-(4'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tert-butylinden-1-yl] zirconium dichloride rac-anti-dimethylsilanediyl[2-methyl-4,8-bis-(3',5'-dimethylphenyl)-1,5,6,7-tetrahydro-s-indacen-1-yl][2-methyl-4-(3',5'-di-tert-butyl-phenyl)-5-methoxy-6-tert-butylinden-1-yl] zirconium dichloride or their corresponding zirconium dimethyl analogues.

In another preferred embodiment of the present invention a cocatalyst system comprising a boron containing cocatalyst, e.g. a borate cocatalyst and an aluminoxane cocatalyst is used.

The catalyst can be used in supported or unsupported form, preferably in supported form. The particulate support material used is preferably an organic or inorganic material, such as silica, alumina or zirconia or a mixed oxide such as silica-alumina, in particular silica, alumina or silica-alumina. The use of a silica support is preferred. The skilled person is aware of the procedures required to support a metallocene catalyst.

Especially preferably, the support is a porous material so that the complex may be loaded into the pores of the support, e.g. using a process analogous to those described in WO 94/14856, WO 95/12622 and WO 2006/097497.

The average particle size of the silica support can be typically from 10 to 100 μm. However, it has turned out that special advantages can be obtained if the support has an average particle size from 15 to 80 μm, preferably from 18 to 50 μm.

The average pore size of the silica support can be in the range 10 to 100 nm and the pore volume from 1 to 3 mL/g.

Examples of suitable support materials are, for instance, ES757 produced and marketed by PQ Corporation, Sylopol 948 produced and marketed by Grace or SUNSPERA DM-L-303 silica produced by AGC Si-Tech Co. Supports can be optionally calcined prior to the use in catalyst preparation in order to reach optimal silanol group content.

The use of these supports is routine in the art.

The ethylene-propylene-1-butene terpolymer base resin can be produced in a sequential polymerization process comprising at least two polymerization reactors (R1) and (R2), whereby in the first polymerization reactor (R1) the first fraction (TERPO-1) is produced, which is subsequently transferred into the second polymerization reactor (R2). In the second polymerization reactor (R2) the second fraction (TERPO-2) is produced in the presence of the first fraction (TERPO-1).

Polymerization processes which are suitable for producing the ethylene-propylene-1-butene terpolymer base resin generally comprises one or two polymerization stages and each stage can be carried out in solution, slurry, fluidized bed, bulk or gas phase.

The term "polymerization reactor" shall indicate that the main polymerization takes place. Thus in case the process consists of one or two polymerization reactors, this definition does not exclude the option that the overall system comprises for instance a pre-polymerization step in a pre-polymerization reactor. The term "consist of" is only a closing formulation in view of the main polymerization reactors.

The term "sequential polymerization process" indicates that the ethylene-propylene-1-butene terpolymer base resin is produced in at least two reactors connected in series. Accordingly, such a polymerization system comprises at least a first polymerization reactor (R1) and a second polymerization reactor (R2), and optionally a third polymerization reactor (R3).

A preferred multistage process is a "loop-gas phase"-process, such as developed by Borealis (known as BORSTAR® technology) described e.g. in patent literature, such as in EP 0 887 379, WO 92/12182, WO 2004/000899, WO 2004/111095, WO 99/24478, WO 99/24479 or in WO 00/68315.

A further suitable slurry-gas phase process is the Spheripol® process of Basell.

The mC2C3C4 base resin comprising the two fractions (TERPO-1) and (TERPO-2) is preferably produced in a process comprising the following steps:

a) polymerizing in a first reactor (R1) propylene, ethylene and 1-butene, obtaining polymer fraction (TERPO-1),
b) transferring said polymer fraction (TERPO-1) and unreacted comonomers of the first reactor in a second reactor (R2),
c) feeding to said second reactor (R2) propylene, ethylene and 1-butene,
d) polymerizing in said second reactor (R2) and in the presence of said polymer fraction (TERPO-1) propylene, ethylene and 1-butene to obtain polymer fraction (TERPO-2) in an intimate mixture with (TERPO-1) and hence the final mC2C3C4 base resin, whereby preferably the polymerization takes place in the presence of a metallocene catalyst system in any one of the embodiments as described herein.

*Additional polymer which can be present in the outer layers*

A possible modifier for said outer layers is a propylene-1-butene random copolymer characterized by a melting temperature Tm measured by differential scanning calorimetry (DSC) in the range from 70 to 90 °C, a 1-butene content measured by $^{13}$C-NMR analysis in an amount of 20.0 to 35.0 wt.-% with respect the total propylene-1-butene random copolymer, whereby the units derived from propylene and 1-butene add up to 100 wt.-%, and a melt flow rate $MFR_2$ (230 °C / 2.16 kg) measured according to ISO 1133 in the range of 1.0 to 18.0 g/10 min.

In a preferred embodiment the propylene-1-butene random copolymer has an elongation at break (ASTM D638) of 100 to 900 %, preferably of 300 to 850 % and more preferably of 500 to 800 %.

In another embodiment the propylene-1-butene random copolymer has in addition one or more, preferably all of the following:

a) a tensile strength at break (ASTM D638) of at least 15 MPa, preferably in the range of 16 to 50 MPa, more preferably 20 to 45 MPa and even more preferably 25 to 40 MPa;
b) a tensile (Young's) modulus (according to ASTM D638) of least 200 MPa, preferably in the range of 210 to 450 MPa, more preferably 250 to 400 MPa;
c) a shore D hardness (ASTM D2240) of at least 45, preferably in the range of 48 to 65, more preferably 50 to 60.

Propylene-1-butene random copolymers having these features are commercially available inter alia from Mitsui Chemicals e.g. under the tradename Tafmer XM series.

A further suitable modifier is a propylene-ethylene random copolymer having an ethylene content measured by

$^{13}C$-NMR analysis in an amount of 1.0 to 25.0 wt.-% with respect the total propylene-ethylene random copolymer, and a melt flow rate $MFR_2$ (230 °C / 2.16 kg) measured according to ISO 1133 in the range of 1.0 to 300.0 g/10 min.

The ethylene content is preferably in the range of 2.0 to 20.0 wt-% and more preferably in the range of 4.0 to 18.0 wt.-%.

The $MFR_2$ is preferably in the range of 2.0 to 200 g/10 min, more preferably in the range of 3.0 to 100 g/10 min and most preferably in the range of 4.0 to 30.0 g/10 min. Propylene-ethylene random copolymers having these features are commercially available inter alia form ExxonMobil e.g. under the tradename Vistamaxx.

Said modifier may be comprised in an amount of up to 30.0 wt.-%, preferably up to 20.0 wt.- %.

*Core layer*

According to the present invention, the multilayer film comprises furthermore a core layer (CL), which is a polypropylene-based layer.

Suitable polypropylene polymers are propylene homopolymers or propylene random copolymers.

Preferably, propylene homopolymers are used.

*The propylene homopolymer (H-PP)*

In an embodiment of the present invention, the core layer (CL) comprises a propylene homopolymer (H-PP). More preferably, the core layer (CL) consists of a propylene homopolymer (H-PP).

The expression "propylene homopolymer" used in the instant invention relates to a polypropylene that consists substantially, i.e. of more than 98.0 wt.-% of, preferably of more than 99.0 wt.-%, even more preferably of more than 99.5 wt.-%, still more preferably of at least 99.8 wt.-%, of propylene units. In a preferred embodiment, only propylene units in the propylene homopolymer (HPP) are detectable.

Accordingly, it is preferred that the propylene homopolymer (H-PP) has a xylene soluble content (XCS) as determined according to ISO 16152 of below 5.0 wt.-%, more preferably below 4.0 wt.-%, still more preferably below 3.5 wt.-%.

It is preferred that the propylene homopolymer (H-PP) is featured by a high isotacticity.

Accordingly, it is preferred that the propylene homopolymer (H-PP) has a mmmm pentad concentration of ≥ 85.0 %, preferably in the range of from 85.0 to 98.0 % determined by NMR-spectroscopy, and/or 2,1 erythro regio-defects of below 1.0 %, preferably below 0.5 %, more preferably below 0.3 % determined by $^{13}C$-NMR spectroscopy.

A suitable lower limit is 0.0 % for Ziegler-Natta catalysed propylene homopolymers and 0.05 % for metallocene catalysed propylene homopolymers.

It is especially preferred that the propylene homopolymer (H-PP) has a weight average molecular weight Mw in the range of 260 to 1000 kg/mol, preferably in the range of 300 to 700 kg/mol, still more preferably in the range of 380 to 650 kg/mol.

Further, it is preferred that the propylene homopolymer (H-PP) has a rather broad molecular weight distribution (Mw/Mn). Accordingly, it is preferred that the molecular weight distribution (Mw/Mn) of the propylene homopolymer (H-PP) is in the range of 3.5 to 10.0, more preferably in the range of 4.0 to 8.5, like in the range of 4.5 to 7.5.

Additionally, it is preferred that the propylene homopolymer (H-PP) has a very low melt flow rate. Accordingly, the melt flow rate (2.16 kg, 230 °C) measured according to ISO 1133 of the propylene homopolymer (H-PP) is preferably in the range of 0.1 to 15.0 g/10 min, more preferably in the range of 1.5 to 10.0 g/10 min, still more preferably in the range of 2.5 to 4.0 g/10 min.

In a preferred embodiment, the propylene homopolymer (H-PP) is thermomechanically stable. Accordingly, it is preferred that the propylene homopolymer (H-PP) has a melting temperature Tm of at least 145 °C, more preferably at least 150 °C, still more preferably at least 160 °C. A reasonable upper limit for Tm is 170 °C.

Preferably, the propylene homopolymer (H-PP) according to the present invention is a propylene homopolymer known in the art.

In particular, it is preferred that the propylene homopolymer (H-PP) is the commercial propylene homopolymer HC101BF of Borealis AG.

*Film structure*

According to the present invention, the multilayer film comprises at least a first and the second outer layers (OL1) and (OL2) and a core layer (CL).

The outer layers (OL1) and (OL2) of the multilayer film according to the present invention acts as sealing layers.

The term "sealing layer" is understood herein as used in the technical field of packaging, i.e. the term "sealing layer" indicates that said layer can be used for sealing purposes, i.e. on the surface of this layer or part of this layer the

sealing can take place.

In one preferred embodiment the multilayer biaxially oriented film comprises at least three layers, namely at least one core layer (CL), and two sealing, respectively outer layers (OL1 and OL2), namely a first sealing, respectively outer layer (OL1) and a second sealing, respectively outer layer (OL2), wherein the multilayer biaxially oriented polymer film has the stacking order first sealing, respectively outer layer (OL1) - core layer (CL) - second sealing, respectively outer layer (OL2).

The first sealing, respectively outer layer (OL1) and second sealing, respectively outer layer (OL2) can be chemically different, e.g. a different mC2C3C4 base resin as described above or different blends with modifier, or identical, i.e. the same mC2C3C4 base resin, the latter being preferred.

The films according to the present invention may further comprise one or two tie layers (TL1) and (TL2). The optional tie layers are located between the core layer (CL) and one or both of the outer layers (OL1) and/or (OL2).

A possible film structure therefore is OL1/TL1/CL/TL2/OL2.

In an embodiment the tie layers (TL1) and (TL2) are made of a polypropylene based polymer, preferably of the same propylene based polymer.

Suitable polypropylene based polymers are as defined above for the core layer (CL).

In a preferred embodiment, the tie layers (TL1) and (TL2) are made of the same polypropylene polymer as the core layer (CL), more preferably the same propylene homopolymer (H-PP).

Preferably, the multilayer biaxially oriented polymer film is obtained by coextrusion. The coextrusion can be accomplished on a blown film line or on a cast film line, the latter being preferred. After coextrusion the multilayer oriented polymer film is biaxially stretched. Conventional film production techniques may be used for the production of the multilayer film according to the present invention. Typically, the film layers are coextruded in manner as known in the art and then oriented to yield the biaxially oriented (BOPP) multilayer film.

Thus, after coextrusion of the layers, the so obtained multilayered films are oriented in machine direction (MDO) as well as in transverse direction (TDO).

In case the multilayer biaxially oriented polymer film is produced by cast film technology the molten polymers are extruded through flat extrusion die onto a chill roll to cool the polymer to a solid film of at least three layers.

For the production of the multilayer biaxially oriented polymer film the process is carried out by coextruding the melts of the polymer for the core layer (CL), of the propylene-ethylene random copolymer for the outer layers (OL1 and OL2) and optionally of the polymer for the tie layers (TL1 and/or TL2), corresponding to the individual layers of the multilayer biaxially oriented polymer film through flat-film multilayer die, taking off the resultant polymer film over one or more rolls for solidification. As it is conventional in the coextrusion process, the polymer of each respective individual layer is firstly compressed and liquefied in an extruder, it being possible for any additives to be already added to the polymer or introduced at this stage via a masterbatch. The melts are then forced simultaneously through a flat-film die (slot die), and the extruded multilayer polymer film is taken off on one or more take-off rolls, during which it cools and solidifies.

It has proven particularly favorable to keep the take-off roll or rolls, by means of which the extruded film is cooled and solidified. Orientation may be accomplished by stretching or pulling the film first in the machine direction (MD) followed by transverse direction (TD) orientation, like in the tenter-frame orientation process. Orientation may be sequential or simultaneous, depending upon the desired film features. Preferred orientation ratios are commonly from between three to six in the machine direction and between four to ten in the transverse direction.

Thus, in the BOPP film the layers may have the following thicknesses:

Each outer layer: 0.3 μm to 3.0 μm, preferably 0.4 μm to 2.0 μm, more preferably 0.5 μm to 1.5 μm. Preferably, both outer layers have the same thickness.

Core layer: 5 μm to 40 μm, preferably 10 μm to 35 μm, more preferably 15 μm to 25 μm. Each tie layers, if present: 1.0 μm to 5 μm, preferably 1.5 μm to 4.5 μm, more preferably 2.0 μm to 4.50 μm. Preferably, both tie layers have the same thickness.

The total thickness of the BOPP film is 8 μm to 80 μm, preferably 10 μm to 60 μm, more preferably 15 μm to 40 μm.

The thickness of a film layer can be determined, as known in the art, by microscopic techniques, such as optical microscopy or electronic microscopy. As an example, a thin slice of the film is cut perpendicularly to the plane of the film using a microtome blade as follows. The film is cooled in liquid nitrogen in a microtome holder. Then a microtome blade cuts several slices from about 10 to 15 microns in thickness. These slices are then observed with an optical microscope, and an image is projected therefrom. A software program, as known in the art, can be used to measure the thickness of each layer as shown on the projected image. Measurements can be made at different points on the image, and then an average can be determined. The film layers are clearly distinguishable by their different contrasts.

Optionally one or both, surface (s) of the multi-layer biaxially oriented polymer film can be corona-or flame-treated by one of the known methods. For the corona treatment, the film is passed between two conductor elements serving as

electrodes, with such a high voltage, usually an alternating voltage (about 10000 V and 10000 5 Hz), being applied between the electrodes that spray or corona discharges can occur. Due to the spray or corona discharge, the air above the film surface is ionized and reacts with the molecules of the film surface, causing formation of polar inclusions in the essentially non-polar polymer matrix. The treatment intensities are in the usual range, preferably from 38 to 45 dynes/cm after production.

The biaxially oriented polypropylene-based multilayer film according to the present invention is characterized by a sealing initiation temperature determined as described in the experimental part on a BOPP film with a thickness of 25 μm in the range of 80 to 105 °C, preferably in the range of 90 to 104 °C, and more preferably in the range of 100 °C to 104 °C.

The inventive multilayer biaxially oriented polymer film is fully recyclable and thus improves sustainability, as it is a "100 % PP" solution with no other polymer than propylene-based polymers being present.

Furthermore, the present invention is also directed to the use of the inventive multilayer biaxially oriented polymer film as packing material, in particular as a packing material for food and/or non-food products like textiles, flowers, pet food, detergents and protective films for cardboard boxes containing tobacco product or perfumes.

The invention will be further described with reference to the following non-limiting examples.

## Experimental Part

### Measuring methods

The following definitions of terms and determination methods apply for the above general description of the invention as well as to the below examples unless otherwise defined.

#### Melt Flow Rate of the ethylene-propylene-1-butene terpolymer base resin

The melt flow rate (MFR) was determined according to ISO 1133 - Determination of the melt mass-flow rate (MFR) and melt volume-flow rate (MVR) of thermoplastics Part 1: Standard method and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

#### Comonomer content of the second polymer fraction (TERPO-2)

The comonomer content of the second polymer faction (TERPO-2) is calculated according to formula (I).

$$\frac{C(A) - w(A1)x\,C(A1)}{w(A2)} = C(A2) \quad (I)$$

wherein

w(A-1) is the weight fraction [in wt%] of the first polymer fraction (TERPO-1),
w(A-2) is the weight fraction [in wt%] of second polymer fraction (TERPO-2),
C(A-1) is the comonomer content [in wt%] of the first polymer fraction (TERPO-1),
C(A) is the comonomer content [in wt%] of the ethylene-propylene-1-butene terpolymer (TERPO),
C(A-2) is the calculated comonomer content [wt%] of the second polymer fraction (TERPO-2).

#### Calculation of melt flow rate $MFR_2$ of the polymer fraction (TERPO-2)

The MFR of the second polymer faction (RACO-2) is calculated according to formula (II).

$$MFR(A2) = 10^{\left[\frac{\log(MFR(A)) - w(A1)\,x\,\log\,(MFR(A1))}{w(A2)}\right]} \quad (II)$$

wherein

w(A1) is the weight fraction [in wt%] of the polymer fraction TERPO-1,
w(A2) is the weight fraction [in wt%] of the polymer fraction TERPO-2,
MFR(A1) is the melt flow rate $MFR_2$ (230°C) [g/10min] of the polymer fraction TERPO-1,
MFR(A) is the melt flow rate $MFR_2$ (230°C) [g/10min] of the entire ethylene-propylene-1-butene terpolymer (TERPO),

MFR(A2) is the calculated melt flow rate $MFR_2$ (230°C) [g/10min] of the polymer fraction TERPO-2.

**Quantification of microstructure by NMR spectroscopy (comonomer content & regio-defects) of the ethylene-propylene-1-butene terpolymer base resin**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3 s {pollard04, klimke06} and the RS-HEPT decoupling scheme {fillip05,griffin07}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (*mmmm*) at 21.85 ppm.

Characteristic signals corresponding to the incorporation of 1-butene were observed {brandolini01} and the comonomer content quantified.

The amount of isolated 1-butene incorporated in PBP sequences was quantified using the integral of the αB2 sites at 43.6 ppm accounting for the number of reporting sites per comonomer:

$$B = I_{\alpha B2} / 2$$

The amount of consecutively incorporated 1-butene in PBBP sequences was quantified using the integral of the ααB2B2 site at 40.5 ppm accounting for the number of reporting sites per comonomer:

$$BB = 2 * I_{\alpha\alpha B2B2}$$

In presence of BB the value of B must be corrected for the influence of the αB2 sites resulting from BB:

$$B = (I_{\alpha B2} / 2) - BB/2$$

The total 1-butene content was calculated based on the sum of isolated and consecutively incorporated 1-butene:

$$B_{total} = B + BB$$

Characteristic signals corresponding to the incorporation of ethylene were observed {brandolini01} and the comonomer content quantified.

The amount of isolated ethylene incorporated in PEP sequences was quantified using the integral of the Sββ sites at 24.3 ppm accounting for the number of reporting sites per comonomer:

$$E = I_{S\beta\beta}$$

If characteristic signals corresponding to consecutive incorporation of ethylene in PEE sequence was observed the Sβδ site at 27.0 ppm was used for quantification:

$$EE = I_{S\beta\delta}$$

Characteristic signals corresponding to regio-defects were observed {resconi00}. The presence of isolated 2,1-erythro regio-defects was indicated by the presence of the two methyl sites at 17.7 and 17.2 ppm, by the methylene site at 42.4 ppm and confirmed by other characteristic sites. The presence of 2,1 regio-defect adjacent an ethylene unit was indicated by the two inequivalent Sαβ signals at 34.8 ppm and 34.4 ppm respectively and the Tγγ at 33.7 ppm.

The amount of isolated 2,1-erythro regio-defects ($P_{21e\ isolated}$) was quantified using the integral of the methylene site at 42.4 ppm ($I_{e9}$):

$$P_{21e\ isolated} = I_{e9}$$

If present the amount of 2,1 regio-defect adjacent to ethylene ($P_{E21}$) was quantified using the methine site at 33.7 ppm ($I_{T\gamma\gamma}$):

$$P_{E21} = I_{T\gamma\gamma}$$

The total ethylene content was then calculated based on the sum of ethylene from isolated, consecutively incorporated and adjacent to 2,1 regio-defects:

$$E_{total} = E + EE + P_{E21}$$

The amount of propene was quantified based on the $S\alpha\alpha$ methylene sites at 46.7 ppm including all additional propene units not covered by $S\alpha\alpha$ e.g. the factor $3*P_{21e\ isolated}$ accounts for the three missing propene units from isolated 2,1-erythro regio-defects:

$$P_{total} = I_{S\alpha\alpha} + 3*P_{21e\ isolated} + B + 0.5*BB + E + 0.5*EE + 2*P_{E21}$$

The total mole fraction of 1-butene and ethylene in the polymer was then calculated as:

$$fB = B_{total} / ( E_{total} + P_{total} + B_{total} )$$

$$fE = E_{total} / ( E_{total} + P_{total} + B_{total} )$$

The mole percent comonomer incorporation was calculated from the mole fractions:

$$B [mol\%] = 100 * fB$$

$$E [mol\%] = 100 * fE$$

The weight percent comonomer incorporation was calculated from the mole fractions:

$$B [wt.-\%] = 100 * ( fB * 56.11 ) / ( (fE * 28.05) + (fB * 56.11) + ((1-(fE+fB)) * 42.08) )$$

$$E [wt.-\%] = 100 * ( fE * 28.05 ) / ( (fE * 28.05) + (fB * 56.11) + ((1-(fE+fB)) * 42.08) )$$

The mole percent of isolated 2,1-erythro regio-defects was quantified with respect to all propene:

$$[21e]\ mol\% = 100 * P_{21e\ isolated} / P_{total}$$

The mole percent of 2,1 regio-defects adjacent to ethylene was quantified with respect to all propene:

$$[E21]\ mol\% = 100 * P_{E21} / P_{total}$$

The total amount of 2,1 defects was quantified as following:

$$[21]\ mol\% = [21e] + [E21]$$

Characteristic signals corresponding to other types of regio-defects (2,1-threo, 3,1 insertion) were not observed {resconi00}.

Literature (as referred to above):

| | |
|---|---|
| klimke06 | Klimke, K., Parkinson, M., Piel, C., Kaminsky, W., Spiess, H.W., Wilhelm, M., Macromol. Chem. Phys. 2006;207:382. |
| parkinson07 | Parkinson, M., Klimke, K., Spiess, H.W., Wilhelm, M., Macromol. Chem. Phys. 2007;208:2128. |
| pollard04 | Pollard, M., Klimke, K., Graf, R., Spiess, H.W., Wilhelm, M., Sperber, O., Piel, C., Kaminsky, W., Macromolecules 2004;37:813. |
| filip05 | Filip, X., Tripon, C., Filip, C., J. Mag. Resn. 2005, 176, 239 |
| griffin07 | Griffin, J.M., Tripon, C., Samoson, A., Filip, C., and Brown, S.P., Mag. Res. in Chem. 2007 45, S1, S198. |
| castignolles09 | Castignolles, P., Graf, R., Parkinson, M., Wilhelm, M., Gaborieau, M., Polymer 50 (2009) 2373. |
| resconi00 | Resconi, L., Cavallo, L., Fait, A., Piemontesi, F., Chem. Rev. 2000, 100, 1253. |
| brandolini01 | A.J. Brandolini, D.D. Hills, "NMR spectra of polymers and polymer additives", Marcel Deker Inc., 2000. |


**Xylene solubles (XCS, wt.-%)**

The xylene soluble (XCS) fraction as defined and described in the present invention was determined in line with ISO 16152 as follows: 2.0 g of the polymer were dissolved in 250 ml p-xylene at 135 °C under agitation. After 30 minutes, the solution was allowed to cool for 15 minutes at ambient temperature and then allowed to settle for 30 minutes at 25 +/- 0.5 °C. The solution was filtered with filter paper into two 100 ml flasks. The solution from the first 100 ml vessel was evaporated in nitrogen flow and the residue dried under vacuum at 90°C until constant weight is reached. The xylene soluble fraction (percent) can then be determined as follows:

$$XCS\% = (100*m*V0)/(m0*v)$$

m0 = initial polymer amount (g);
m = weight of residue (g);
V0 = initial volume (ml);
v = volume of analysed sample (ml).

**DSC analysis, melting (Tm) and crystallization temperature (Tc)**

Data were measured with a TA Instrument Q2000 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225°C.

Crystallization temperature ($T_c$) and crystallization enthalpy ($H_c$) were determined from the cooling step, while melting temperature ($T_m$) and melting enthalpy ($H_m$) are determined from the second heating step.

**Sealing behavior**

**Sealing initiation temperature (SIT); sealing end temperature (SET), sealing range:**

The measurement was done according to the slightly modified ASTM F1921 - 12, where the test parameters sealing pressure, delay time and clamp separation rate have been modified. The lower limit (heat sealing initiation temperature (SIT)) is the sealing temperature at which a sealing strength of 5 N is achieved. The upper limit (sealing end temperature (SET)) is reached, when the films stick to the sealing device.

The sealing range was determined on a J&B Universal Sealing Machine Type 4000 with the films as produced indicated below blown film of 60 μm thickness with the following further parameters:

Conditioning time: > 96 h
Specimen width: 25 mm
Sealing pressure: 0,67 N/mm$^2$ (PP)
Sealing time: 1 sec
Delay time: 30 sec
Sealing jaws dimension: 50x5 mm
Sealing jaws shape: flat
Sealing jaws coating: Niptef

Sealing temperature: ambient - 240°C
Sealing temperature interval: 5°C
Start temperature: 50°C
Grip separation rate: 42 mm/sec

The Sealing initiation temperature at a force of 2N was evaluated via linear interpolation.

The sealing force in N at 120 °C was evaluated from the sealing curve.

**2. Examples**

**Propylene-ethylene random copolymer (mC2C3C4) preparation**

**Catalyst: Synthesis of metallocene**

The metallocene complex (Metallocene MC-2) has been produced as described in WO2019/179959 for MC-2.

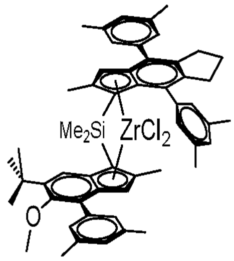

*Preparation of MAO-silica support*

A steel reactor equipped with a mechanical stirrer and a filter net was flushed with nitrogen and the reactor temperature was set to 20°C. Next silica grade DM-L-303 from AGC Si-Tech Co, pre-calcined at 600°C (5.0 kg) was added from a feeding drum followed by careful pressuring and depressurising with nitrogen using manual valves. Then toluene (22 kg) was added. The mixture was stirred for 15 min. Next 30 wt.-% solution of MAO in toluene (9.0 kg) from Lanxess was added via feed line on the top of the reactor within 70 min. The reaction mixture was then heated up to 90°C and stirred at 90°C for additional two hours. The slurry was allowed to settle and the mother liquor was filtered off. The catalyst was washed twice with toluene (22 kg) at 90°C, following by settling and filtration. The reactor was cooled off to 60°C and the solid was washed with heptane (22.2 kg). Finally MAO treated SiO2 was dried at 60° under nitrogen flow for 2 hours and then for 5 hours under vacuum (-0.5 barg) with stirring. MAO treated support was collected as a free-flowing white powder found to contain 12.2% Al by weight.

*Inventive Catalyst System 1(ICS1) Catalyst preparation*

30 wt% MAO in toluene (0.7 kg) was added into a steel nitrogen blanked reactor via a burette at 20°C. Toluene (5.4 kg) was then added under stirring. Metallocene MC-2 (93 g) was added from a metal cylinder followed by flushing with 1 kg toluene. The mixture was stirred for 60 minutes at 20°C. Trityl tetrakis(pentafluorophenyl) borate (91 g) was then added from a metal cylinder followed by a flush with 1 kg of toluene. The mixture was stirred for 1 h at room temperature. The resulting silution was added to a a stirred cake of MAO-silica support prepared as described above over 1 hour. The cake was allowed to stay for 12 hours, folled by drying under N2 flow at 60°C for 2h and additionaly for 5 h under vacuum (-0.5 barg) under stirring stirring.

Dried catalyst was sampled in the form of pink free flowing powder containing 13.9% Al and 0.11% Zr.

The polymerization for preparing the ethylene-propylene-1-butene terpolymer base resin was performed in a Borstar pilot plant with a 2-reactor set-up (loop - gas phase reactor (GPR)) and a pre-polymerizer, using the catalyst system as described above.

In Table 1, the polymerization conditions for inventive and the comparative ethylenepropylene-1-butene terpolymer base resin and the final properties of the resins are given.

**Table 1:** Polymerization conditions and final properties of inventive ethylene-propylene-1-butene terpolymer base resin (IE1) and comparative ethylene-propylene-1-butene terpolymer base resin:

| | | mC2C3C4 terpo (CE1) | mC2C3C4 terpo (CE2) | mC2C3C4 terpo (inventive) |
|---|---|---|---|---|
| **Prepolymerizer** | | | | |
| Temperature | °C | 20 | 20 | 20 |
| Pressure | kPa | 5263 | 5374 | 5122 |
| Catalyst feed | (g/h) | 4.0 | 5.2 | 3.9 |
| **Loop** | | | | |
| Temperature | °C | 65 | 65 | 65 |
| Pressure | kPa | 5237 | 5360 | 5210 |
| Feed H2/C3 | mol/kmol | 0.06 | 0.10 | 0.10 |
| Feed C2/C3 | mol/kmol | 18.7 | 18.5 | 18.9 |
| Feed C4/C3 | mol/kmol | 64.4 | 54.7 | 65.4 |
| Split | wt.-% | 68 | 61 | 53 |
| C2 (of TERPO-1) | wt.-% | 0.70 | 1.4 | 0.8 |
| C4 (of TERPO-1) | wt.-% | 6.13 | 6.0 | 5.8 |
| $MFR_2$ (of TERPO-1) | g/10min | 2.1 | 3.9 | 4.3 |
| **GPR** | | | | |
| Temperature | °C | 80 | 75 | 80 |
| Pressure | kPa | 2501 | 2500 | 2400 |
| H2/C3 | mol/kmol | 1.1 | 1.2 | 1.1 |
| C2/C3 | mol/kmol | 81.2 | 80.5 | 81.2 |
| C4/C3 | mol/kmol | 59.4 | 49.5 | 60.7 |
| Split | wt.-% | 32 | 39 | 57 |
| C2 of GPR polymer (TERPO-2) | wt.-% | 1.7 | 2.4 | 1.4 |
| C4 of GPR polymer (TERPO-2) | wt.-% | 10.4 | 3.9 | 8.8 |
| $MFR_2$ of GPR polymer (TERPO-2) | g/10 min | 7.4 | 8.4 | 11.6 |
| **Final polymer (pellets)** | | | | |
| $MFR_2$ | g/10min | 4.1 | 5.3 | 6.9 |
| C2 | wt.-% | 1.0 | 1.9 | 1.1 |
| C4 | wt.-% | 7.5 | 5.2 | 7.2 |
| XCS | wt.-% | 2.5 | 4.3 | 3.9 |
| Tm | °C | 126.2 | 130.1 | 126.1 |
| Tc | °C | 89.9 | 94.6 | 88.6 |
| 2,1 regio-defects | mol-% | 0.29 | 0.29 | 0.33 |

The polymer powders were compounded in a co-rotating twin-screw extruder Coperion ZSK 70 at 220°C with 0.1 wt.-% antiblock agent (synthetic silica; CAS-no. 7631-86-9); 0.05 wt.-% antioxidant (Tris (2,4-di-tbutylphenyl)phosphite, CAS-no. 31570-04-4, commercially available as Irgafos 168FF from BASF SE); 0.05 wt.-% of a sterically hindered phenol (Pentaerythrityl-tetrakis(3-(3',5'-di-tert.butyl-4-hydroxyphenyl)-propionate, CAS-no. 6683-19-8, commercially available as Irganox 1010FF from BASF SE); and 0.05 wt.-% (each based on the total weight of the polymer) of Synthetic hydrotalcite (CAS-no. 11097-59-9) as acid scavenger.

**Multilayer BOPP film**

**Inventive biaxially oriented multilayer film (IE1) and (IE2)**

For the core layer (CL) the commercial product HC101BF of Borealis AG which is a homopolymer having an $MFR_2$ (230 °C) of 3.2 g/10min has been used.

For the outer layers (OL1) and (OL2) the inventive C2C3C4 terpolymer was used.

Multilayer BOPP film was produced on a BOPP pilot line.

In order to produce the BOPP film mentioned above, first a cast film was produced with coextrusion of 3 layers operated with 3 extruders. Extrusion condition are shown in Table 2. The cast roll had a temperature of 35 °C and the water batch temperature was 30 °C.

The thickness of the original cast film was chosen/adjusted based on the final thickness and stretch ratios in MD/TM of the final BOPP film.

Table 2: Production conditions for the film of IE1 and IE2 (identical in terms of temperature and output for all examples):

| Extruder | | **Main** | **Coex 1** | **Coex 2** |
|---|---|---|---|---|
| Layer | | CL | OL1 | OL2 |
| Resin | | HC101BF | C2C3C4 inventive | C2C3C4 inventive |
| Melt temp | °C | 254 | 254 | 254 |
| Output IE1 | kg/h | 0.2 | 4.6 | 0.2 |
| Output IE2 | Kq/h | 0.1 | 4.8 | 0.1 |

Afterwards biaxially orientation was done:

*Machine direction stretching (MDO)*

MD stretching ratio = 4.7 (in 1 step - 1st fast roll in contact with the bath side skin) MDO rolls temperature: preheat 120 °C / stretch 118 °C / annealing 120 °C

*Transverse direction stretching (TDO)*

TD stretching ratio = 8.8
TDO oven temperature: preheat 183-180-175 °C / stretch 158-158 °C / annealing 162-162 °C
TDO rail width: 195-195-195-195 / 850-1500 / 1450-1400-1395mm

*Treatment*

Top corona on caster skin: 2.4 kW equivalent to 25.0 Wmin/$m^2$

**Table 3:** The film structure after biaxial orientations for IE1 and IE2 was:

| Layer | Resin | Final thickness IE1 | Film thickness IE2 |
|---|---|---|---|
| Coex 1 (OL1) | mC2C3C4 inventive | 1 µm | 0.5 µm |
| Main (CL) | HC101BF | 23.0 µm | 24.0 µm |
| Coex 2 (OL2) | mC2C3C4 inventive | 1 µm | 0.5 µm |

**Comparative biaxially oriented multilayer films CE1, CE2 and CE3**

For CE1 the above prepared comparative (CE1) mC2C3C4 copolymer was used in the outer layers, core layer was HC101BF.

For CE2 the above prepared comparative (CE2) mC2C3C4 copolymer was used in the outer layers, core layer

was HC101BF.

For CE3, a $C_2C_3C_4$ terpolymer produced with a Ziegler-Natta catalyst, TD310BF, characterized by an $MFR_2$ of 6.0 g/10 min and a melting temperature Tm of 130 °C, commercially available from Borealis was used in the outer layers; core layer was HC101BF.

The preparation of the biaxially oriented multilayer film was done as described above for the Inventive film structure.

In Table 4 the film properties of the inventive film structure as well as for the comparative films are shown.

**Table 4:** film properties:

| | | CE1 | CE2 | IE1 | IE2 | CE3 |
|---|---|---|---|---|---|---|
| Outer layers | | Each 1 μm | Each 1 μm | Each 1 μm | Each 0.5 μm | Each 1 μm |
| terpolymer | | 100 wt.-% comparative mC2C3C4 (CE1) | 100 wt.-% comparative mC2C3C4 (CE2) | 100 wt.-% inventive mC2C3C4 | 100 wt.-% inventive mC2C3C4 | 100 wt.-% TD310BF |
| SIT at 2N* | °C | 107 | 107 | 102 | 102 | 107 |
| Tm-SIT | °C | 19.2 | 23.1 | 24.1 | 24.1 | 23.0 |
| Sealing force 120 °C | N | 5.5 | 4.0 | 5.5 | 5.2 | 3.0 |
| *linear interpolation | | | | | | |

As can be seen, IE1 shows a reduction in the SIT (ca. 102 °C at 2 N) by 5 °C compared to the CEs (ca. 107 °C at 2 N). Moreover, IE2 has similar SIT and sealing forces at 120 °C as IE1 despite the thickness layer is halved.

In comparison to CE2, the IEs display lower SIT and broad processing window despite having similar C2 and C4 contents and similar thermal (DSC) results. Therefore, this highlights the importance of polymer design and proper property selection to obtain better results in the final application.

## Claims

**1.** Biaxially oriented polypropylene-based multilayer film comprising at least a core layer (CL), a first outer layer (OL1) and a second outer layer (OL2), wherein

the first and the second outer layers (OL1) and (OL2) comprise
70.0 to 100.0 wt.-%, based on the total weight of the respective outer layer, of a metallocene catalysed ethylene-propylene-1-butene terpolymer (mC2C3C4) base resin having

- an ethylene (C2) content measured by $^{13}$C-NMR analysis (as described in the experimental part) in the range of 0.7 to 2.0 wt.-% with respect to the total weight of the mC2C3C4 base resin;
- a 1-butene (C4) content measured by $^{13}$C-NMR analysis (as described in the experimental part) in the range of 4.0 to 7.8 wt.-% with respect to the total weight of the mC2C3C4 base resin;
- a propylene (C3) content measured by $^{13}$C-NMR analysis (as described in the experimental part) in the range of 90.2 to 96.0 wt.-% with respect to the total weight of the mC2C3C4 base resin;

whereby the units derived from ethylene, propylene and butene add up to 100 wt.-%, and

- a melt flow rate $MFR_2$ (230 °C / 2.16 kg) measured according to ISO 1133 in the range from 3.0 to 10.0 g/10 min;
- a xylene cold soluble (XCS) content in the range of 2.0 to 5.0 wt.-%, determined at 25 °C according ISO 16152, based on the total wiegt of the mC2C3C4 base resin;
- a melting temperature $T_m$ as determined by DSC according to ISO 11357 in the range from 120 to 129 °C;
- a crystallization temperature $T_c$ as determined by DSC according to ISO 11357 in the range from 80 to 110 °C and
- a number of 2,1 regio-defects measured by $^{13}$C-NMR analysis (as described in the experimental part) in the range of 0.10 to 1.5 mol-% and

whereby the mC2C3C4 base resin consists of

(i) 30.0 to 60.0 wt.-%, based on the total weight of the mC2C3C4 base resin, of a first polymer component (TERPO-1) having

- a melt flow rate $MFR_2$ (230 °C / 2.16 kg) measured according to ISO 1133 in the range from 1.0 to 10.0 g/10 min;
- an ethylene (C2) content measured by $^{13}C$-NMR analysis (as described in the experimental part) in the range of 0.7 to 1.3 wt.-% with respect to the total weight of the first polymer component (TERPO-1) and
- a 1-butene (C4) content measured by $^{13}C$-NMR analysis (as described in the experimental part) in the range of 4.0 to 6.0 wt.-% with respect to the total weight of the first polymer component (TERPO-1); and

(ii) 40.0 to 70.0 wt.-% based on the total weight of the mC2C3C4 base resin, of a second polymer component (TERPO-2) having

- a melt flow rate $MFR_2$ (230 °C / 2.16 kg) measured according to ISO 1133 in the range from 10.0 to 20.0 g/10 min;
- an ethylene (C2) content measured by $^{13}C$-NMR analysis (as described in the experimental part) in the range of 1.3 to 2.0 wt.-% with respect to the total weight of the second polymer component (TERPO-2) and
- a 1-butene (C4) content measured by $^{13}C$-NMR analysis (as described in the experimental part) in the range of 6.0 to 10.0 wt.-% with respect to the total weight of the second polymer component (TERPO-2) and

(iii) optionally one or more additives, selected from the group consisting of slip agents, anti-block agents, UV stabilizers, antistatic agents, alpha-nucleating agents, antioxidants and mixtures thereof;

whereby the core layer (CL) is a polypropylene-based layer and
whereby the biaxially oriented polypropylene-based multilayer film has a sealing initiation temperature measured on a 25μm biaxially oriented test cast film as described in the experimental part in the range of 80 to 105 °C.

**2.** The biaxially oriented polypropylene-based multilayer film according to claim 1, wherein the mC2C3C4 base resin comprises two polymer fractions (TERPO-1) and (TERPO-2), whereby the fraction (TERPO-1) is present in an amount of from 40.0 to 58.0 wt.-%, preferably from 45.0 to 55.0 wt.-%, based on the total weight of the mC2C3C4 base resin, and the fraction (TERPO-2) is thus present in an amount of from 60.0 to 52.0 wt.-%, preferably from 55.0 to 45.0 wt.-%, based on the total weight of the mC2C3C4 base resin.

**3.** The biaxially oriented polypropylene-based multilayer film according to claim 1 or 2, wherein the fraction (TERPO-1) of the mC2C3C4 base resin has an ethylene content, based on the total weight of the fraction (TERPO-1), in the range of 0.7 to 1.2 wt.-%, preferably of 0.8 to 1.2 wt.-%, and the fraction (TERPO-2) has an ethylene content, based on the total weight of the fraction (TERPO-2), in the range of 1.3 to 1.9 wt.-%, preferably of 1.4 to 1.9 wt.-%, whereby the ethylene content of fraction (TERPO-1) is lower than the ethylene content of fraction (TERPO-2) and
wherein the 1-butene content of fraction (TERPO-1) of the mC2C3C4 base resin, based on the total weight of the fraction (TERPO-1), is in the range of 4.1 to 6.0 wt.-%, preferably 4.1 to 5.9 wt.-%, and the fraction (TERPO-2) has an 1-butene content, based on the total weight of the fraction (TERPO-2), in the range of 6.5 to 9.5 wt.-%, preferably of 7.0 to 9.0 wt.-%, whereby the ethylene content of fraction (TERPO-1) is lower than the ethylene content of fraction (TERPO-2).

**4.** The biaxially oriented polypropylene-based multilayer film according to any of the preceding claims, wherein fraction (TERPO-1) has a melt flow rate $MFR_2$ (230 °C/2.16 kg) measured according to ISO 1133 in the range of from 2.0 to 9.5 g/10 min, preferably from 2.5 to 9.0 g/10 min, and that fraction (TERPO-2) has a melt flow rate $MFR_2$ (230 °C/2.16 kg) measured according to ISO 1133 in the range of from 10.5 to 19.0 g/10 min, more preferably 11.0 to 18.0 g/10 min, whereby the $MFR_2$ of fraction (TERPO-1) is lower than the $MFR_2$ of fraction (TERPO-2).

**5.** The biaxially oriented polypropylene-based multilayer film according to any of the preceding claims, wherein the mC2C3C4 base resin has

an ethylene (C2) content in the range of 0.8 to 1.9 wt.-%, preferably 0.9 to 1.8 wt.-% and more preferably 1.0 to 1.8

wt.-%, with respect to the total weight of the mC2C3C4 base resin and
a 1-butene (C4) content in the range of 4.1 to 7.7 wt.-%, preferably 4.2 to 7.6 wt.-%, with respect to the total weight of the mC2C3C4 base resin.

**6.** The biaxially oriented polypropylene-based multilayer film according to any of the preceding claims, wherein the mC2C3C4 base resin has

a melt flow rate $MFR_2$ (230 °C / 2.16 kg) measured according to ISO 1133 in the range of 4.5 to 9.5 g/10min, preferably 5.0 to 9.0 g/10 min and more preferably 5.5 to 8.5 g/ 10 min or
a xylene cold soluble (XCS) content as determined according to ISO 16152 in the range of 2.5 to 4.8 wt.-%, preferably from 2.8 to 4.5 wt.-%, based on the weight of the mC2C3C4 base resin.

**7.** The biaxially oriented polypropylene-based multilayer film according to any of the preceding claims, wherein the mC2C3C4 base resin has

a melting temperature $T_m$ as determined by DSC according to ISO 11357 in the range of 122 to 128 °C and
a crystallization temperature $T_c$ as determined by DSC according to ISO 11357 in the range of 82 to 105 °C, preferably 85 to 100 °C and more preferably 86 to 90°C.

**8.** The biaxially oriented polypropylene-based multilayer film according to any of the preceding claims, wherein the outer layers (OL1) and (OL2) consist of the mC2C3C4 base resin as defined in any of the claims 1 to 7.

**9.** The biaxially oriented polypropylene-based multilayer film according to any of the preceding claims, wherein the core layer (CL) comprises, preferably consists of a propylene homopolymer (H-PP).

**10.** The biaxially oriented polypropylene-based multilayer film according to claim 9, wherein the propylene homopolymer (H-PP) is **characterized by** a xylene soluble content (XCS) as determined according to ISO 16152 of below 5.0 wt.-%, more preferably below 4.0 wt.-%, still more preferably below 3.5 wt.-% and/or a melting temperature Tm (measured with DSC) of at least 145 °C, more preferably at least 150 °C, still more preferably at least 160 °C.

**11.** The biaxially oriented polypropylene-based multilayer film according to any of the preceding claims, wherein the film may further comprise one or two tie layers (TL1) and (TL2), whereby the optional tie layers are located between the core layer (CL) and one or both of the outer layers (OL1) and/or (OL2).

**12.** The biaxially oriented polypropylene-based multilayer film according to claim 11, wherein the tie layers (TL1) and (TL2) are made of a polypropylene based polymer, preferably of the same propylene based polymer and more preferably of the same polypropylene based polymer as used for the core layer (CL), even more preferably of the same propylene homopolymer as used for the core layer (CL).

**13.** The biaxially oriented polypropylene-based multilayer film according to any of the preceding claims, wherein the thickness of the layers after biaxial orientation is for each outer layer: 0.3 μm to 3.0 μm, preferably 0.4 μm to 2.0 μm, more preferably 0.5 μm to 1.5 μm, whereby preferably, both outer layers have the same thickness;

the core layer: 5 μm to 40 μm, preferably 10 μm to 35 μm, more preferably 15 μm to 25 μm; and
each tie layers, if present: 1.0 μm to 5 μm, preferably 1.5 μm to 4.5 μm, more preferably 2.0 μm to 4.50 μm, whereby preferably, both tie layers have the same thickness and whereby the total thickness of the BOPP film is 8 μm to 80 μm, preferably 10 μm to 60 μm, more preferably 15 μm to 40 μm.

**14.** The biaxially oriented polypropylene-based multilayer film according to any of the preceding claims, wherein the film is **characterized by** a sealing initiation temperature determined as described in the experimental part on a BOPP film with a thickness of 25 μm in the range of 90 to 104 °C, and more preferably in the range of 100 °C to 104 °C

**15.** Use of the biaxially oriented polypropylene-based multilayer film according to any of the preceding claims, as packing material, in particular as a packing material for food and/or non-food products like textiles, flowers, pet food, detergents and protective films for cardboard boxes containing tobacco product or perfumes.

## Patentansprüche

1. Biaxial orientierte Mehrschichtfolie auf Polypropylenbasis, umfassend mindestens eine Kernschicht (CL), eine erste Außenschicht (OL1) und eine zweite Außenschicht (OL2), wobei die erste und die zweite Außenschicht (OL1) und (OL2) umfassen:

 70,0 bis 100,0 Gew.-%, bezogen auf das Gesamtgewicht der jeweiligen Außenschicht, eines metallocen katalysierten Ethylen-Propylen-1-Buten-Terpolymer-(mC2C3C4)-Basisharzes mit

 • einen Ethylengehalt (C2), gemessen durch $^{13}$C-NMR-Analyse (wie im experimentellen Teil beschrieben), im Bereich von 0,7 bis 2,0 Gew.-%, bezogen auf das Gesamtgewicht des mC2C3C4-Basisharzes;
 • einem 1-Butengehalt (C4), gemessen durch $^{13}$C-NMR-Analyse (wie im Versuchsteil beschrieben), im Bereich von 4,0 bis 7,8 Gew.-% bezogen auf das Gesamtgewicht des mC2C3C4-Basisharzes;
 • einem Propylengehalt (C3), gemessen durch $^{13}$C-NMR-Analyse (wie im Versuchsteil beschrieben), im Bereich von 90,2 bis 96,0 Gew.-% bezogen auf das Gesamtgewicht des mC2C3C4-Basisharzes;

 wobei sich die von Ethylen, Propylen und Buten abgeleiteten Einheiten auf 100 Gew.-% summieren, und

 • eine Schmelzflussrate $MFR_2$ (230 °C / 2,16 kg), gemessen gemäß ISO 1133, im Bereich von 3,0 bis 10,0 g/10 min;
 • einem Xylol-Kaltlöslichkeitsgehalt (XCS) im Bereich von 2,0 bis 5,0 Gew.-%, bestimmt bei 25 °C gemäß ISO 16152, bezogen auf das Gesamtgewicht des mC2C3C4-Basisharzes;
 • eine Schmelztemperatur $T_m$ wie durch DSC gemäß ISO 11357 bestimmt im Bereich von 120 bis 129 °C;
 • eine Kristallisationstemperatur $T_c$ wie durch DSC gemäß ISO 11357 bestimmt im Bereich von 80 bis 110 °C und
 • eine Anzahl von 2,1 Regio-Defekten, gemessen durch $^{13}$C-NMR-Analyse (wie im experimentellen Teil beschrieben) im Bereich von 0,10 bis 1,5 Mol-% und

 wobei das mC2C3C4-Basisharz besteht aus

 (i) 30,0 bis 60,0 Gew.-%, bezogen auf das Gesamtgewicht des mC2C3C4-Basisharzes, einer ersten Polymerkomponente (TERPO-1) mit

 • einer Schmelzflussrate $MFR_2$ (230 °C / 2,16 kg), gemessen gemäß ISO 1133, im Bereich von 1,0 bis 10,0 g/10 min;
 • einen Ethylengehalt (C2), gemessen durch $^{13}$C-NMR-Analyse (wie im Versuchsteil beschrieben), im Bereich von 0,7 bis 1,3 Gew.-%, bezogen auf das Gesamtgewicht der ersten Polymerkomponente (TERPO-1), und
 • einem 1-Butengehalt (C4), gemessen durch $^{13}$C-NMR-Analyse (wie im Versuchsteil beschrieben) im Bereich von 4,0 bis 6,0 Gew.-% bezogen auf das Gesamtgewicht der ersten Polymerkomponente (TERPO-1); und

 (ii) 40,0 bis 70,0 Gew.-%, bezogen auf das Gesamtgewicht des mC2C3C4-Basisharzes, einer zweiten Polymerkomponente (TERPO-2) mit

 • einer Schmelzflussrate $MFR_2$ (230 °C / 2,16 kg), gemessen gemäß ISO 1133, im Bereich von 10,0 bis 20,0 g/10 min;
 • einen Ethylengehalt (C2), gemessen durch $^{13}$C-NMR-Analyse (wie im Versuchsteil beschrieben), im Bereich von 1,3 bis 2,0 Gew.-%, bezogen auf das Gesamtgewicht der zweiten Polymerkomponente (TERPO-2), und
 • einem 1-Butengehalt (C4), gemessen durch $^{13}$C-NMR-Analyse (wie im Versuchsteil beschrieben), im Bereich von 6,0 bis 10,0 Gew.-% bezogen auf das Gesamtgewicht der zweiten Polymerkomponente (TERPO-2) und

 (iii) optional ein oder mehrere Additive, ausgewählt aus der Gruppe bestehend aus Gleitmitteln, Antiblockmitteln, UV-Stabilisatoren, Antistatikmitteln, Alpha-Nukleierungsmitteln, Antioxidantien und Mischungen davon;

wobei die Kernschicht (CL) eine Schicht auf Polypropylenbasis ist und
wobei die biaxial orientierte Mehrschichtfolie auf Polypropylenbasis
eine Versiegelungsinitiierungstemperatur, gemessen an einer 25 μm dicken biaxial orientierten Testflachfolie, wie im experimentellen Teil beschrieben, im Bereich von 80 bis 105 °C aufweist.

**2.** Die biaxial orientierte Mehrschichtfolie auf Polypropylenbasis gemäß Anspruch 1, wobei das mC2C3C4-Basis-Harz zwei Polymerfraktionen (TERPO-1) und (TERPO-2) umfasst, wobei die Fraktion (TERPO-1) in einer Menge von 40,0 bis 58,0 Gew.-%, vorzugsweise von 45,0 bis 55,0 Gew.-%, bezogen auf das Gesamtgewicht des mC2C3C4-Basisharzes, und die Fraktion (TERPO-2) somit in einer Menge von 60,0 bis 52,0 Gew.-%, vorzugsweise von 55,0 bis 45,0 Gew.-%, bezogen auf das Gesamtgewicht des mC2C3C4-Basisharzes, vorliegt.

**3.** Biaxial orientierte Mehrschichtfolie auf Polypropylenbasis nach Anspruch 1 oder 2, wobei die Fraktion (TERPO-1) des mC2C3C4-Basisharzes einen Ethylengehalt, bezogen auf das Gesamtgewicht der Fraktion (TERPO-1), im Bereich von 0,7 bis 1,2 Gew.-%, vorzugsweise von 0,8 bis 1,2 Gew.-%, aufweist, und die Fraktion (TERPO-2) einen Ethylengehalt, bezogen auf das Gesamtgewicht der Fraktion (TERPO-2), im Bereich von 1,3 bis 1,9 Gew.-%, vorzugsweise von 1,4 bis 1,9 Gew.-%, aufweist, wobei der Ethylengehalt der Fraktion (TERPO-1) niedriger ist als der Ethylengehalt der Fraktion (TERPO-2) und
wobei der 1-Butengehalt der Fraktion (TERPO-1) des mC2C3C4-Basisharzes, bezogen auf das Gesamtgewicht der Fraktion (TERPO-1), im Bereich von 4,1 bis 6,0 Gew.-%, vorzugsweise 4,1 bis 5,9 Gew.-%, liegt, und die Fraktion (TERPO-2) einen 1-Butengehalt, bezogen auf das Gesamtgewicht der Fraktion (TERPO-2), im Bereich von 6,5 bis 9,5 Gew.- %, vorzugsweise von 7,0 bis 9,0 Gew.-%, aufweist, wobei der Ethylen-Gehalt der Fraktion (TERPO-1) niedriger ist als der Ethylen-Gehalt der Fraktion (TERPO-2).

**4.** Biaxial orientierte Mehrschichtfolie auf Polypropylenbasis nach einem der vorangehenden Ansprüche, wobei die Fraktion (TERPO-1) eine Schmelzflussrate $MFR_2$ (230 °C/2,16 kg) gemäß ISO 1133 im Bereich von 2,0 bis 9,5 g/10 min, vorzugsweise von 2,5 bis 9,0 g/10 min, aufweist und die Fraktion (TERPO-2) eine Schmelzflussrate $MFR_2$ (230 °C/2,16 kg) gemäß ISO 1133 im Bereich von 10,5 bis 19,0 g/10 min, vorzugsweise von 11,0 bis 18,0 g/10 min, wobei die $MFR_2$ der Fraktion (TERPO-1) niedriger ist als die $MFR_2$ der Fraktion (TERPO-2).

**5.** Biaxial orientierte Mehrschichtfolie auf Polypropylenbasis gemäß einem der vorangehenden Ansprüche, wobei das mC2C3C4-Basis-Harz

einen Ethylengehalt (C2) im Bereich von 0,8 bis 1,9 Gew.-%, vorzugsweise 0,9 bis 1,8 Gew.-% und noch bevorzugter 1,0 bis 1,8 Gew.-%, bezogen auf das Gesamtgewicht des mC2C3C4-Basisharzes, hat und
einen 1-Butengehalt (C4) im Bereich von 4,1 bis 7,7 Gew.-%, vorzugsweise 4,2 bis 7,6 Gew.- %, bezogen auf das Gesamtgewicht des mC2C3C4-Basisharzes.

**6.** Biaxial orientierte Mehrschichtfolie auf Polypropylenbasis nach einem der vorangehenden Ansprüche, wobei das mC2C3C4-Basis-Harz

eine Schmelzflussrate $MFR_2$ (230 °C / 2,16 kg), gemessen gemäß ISO 1133, im Bereich von 4,5 bis 9,5 g/10 min, vorzugsweise 5,0 bis 9,0 g/10 min und noch bevorzugter 5,5 bis 8,5 g/ 10 min, hat oder
einen gemäß ISO 16152 bestimmten Xylol-Kaltlöslichkeitsgehalt (XCS) im Bereich von 2,5 bis 4,8 Gew.-%, vorzugsweise von 2,8 bis 4,5 Gew.-%, bezogen auf das Gewicht des mC2C3C4-Basisharzes.

**7.** Biaxial orientierte Mehrschichtfolie auf Polypropylenbasis nach einem der vorangehenden Ansprüche, wobei das mC2C3C4-Basis-Harz

eine Schmelztemperatur $T_m$, wie durch DSC gemäß ISO 11357 bestimmt im Bereich von 122 bis 128 °C hat und
eine Kristallisationstemperatur $T_c$ wie durch DSC gemäß ISO 11357 bestimmt im Bereich von 82 bis 105 °C, vorzugsweise 85 bis 100 °C und noch bevorzugter 86 bis 90 °C.

**8.** Biaxial orientierte Mehrschichtfolie auf Polypropylenbasis gemäß einem der vorangehenden Ansprüche, wobei die Außenschichten (OL1) und (OL2) aus dem in einem der Ansprüche 1 bis 7 definierten mC2C3C4-Basis-Harz bestehen.

**9.** Biaxial orientierte Mehrschichtfolie auf Polypropylenbasis gemäß einem der vorangehenden Ansprüche, wobei die Kernschicht (CL) vorzugsweise aus einem Propylenhomopolymer (H-PP) besteht.

**10.** Biaxial orientierte Mehrschichtfolie auf Polypropylenbasis gemäß Anspruch 9, wobei das Propylenhomopolymer (H-PP) **gekennzeichnet ist durch** einen Xylol-Kaltlöslichkeitsghalt (XCS) wie gemäß ISO 16152 bestimmt von weniger als 5,0 Gew.-%, mehr bevorzugt weniger als 4,0 Gew.-%, noch bevorzugter weniger als 3,5 Gew.-% und/oder einer Schmelztemperatur Tm (gemessen mit DSC) von mindestens 145 °C, mehr bevorzugt mindestens 150 °C, noch bevorzugter mindestens 160 °C gekennzeichnet ist.

**11.** Biaxial orientierte Mehrschichtfolie auf Polypropylenbasis nach einem der vorangehenden Ansprüche, wobei die Folie ferner eine oder zwei Verbindungsschichten (TL1) und (TL2) umfassen kann, wobei sich die optionalen Verbindungsschichten zwischen der Kernschicht (CL) und einer oder beiden der Außenschichten (OL1) und/oder (OL2) befinden.

**12.** Die biaxial orientierte Mehrschichtfolie auf Polypropylenbasis gemäß Anspruch 11, wobei die Verbindungsschichten (TL1) und (TL2) aus einem Polymer auf Polypropylenbasis bestehen, vorzugsweise aus dem gleichen Polymer auf Propylenbasis, und noch bevorzugter aus dem gleichen Polymer auf Polypropylenbasis wie für die Kernschicht (CL) verwendet, noch bevorzugter aus dem gleichen Propylenhomopolymer wie für die Kernschicht (CL) verwendet.

**13.** Die biaxial orientierte Mehrschichtfolie auf Polypropylenbasis gemäß einem der vorangehenden Ansprüche, wobei die Dicke der Schichten nach der biaxialen Orientierung für jede Außenschicht ist: 0,3 μm bis 3,0 μm, vorzugsweise 0,4 μm bis 2,0 μm, noch bevorzugter 0,5 μm bis 1,5 μm, wobei vorzugsweise beide Außenschichten die gleiche Dicke aufweisen; die Kernschicht: 5 μm bis 40 μm, vorzugsweise 10 μm bis 35 μm, noch bevorzugter 15 μm bis 25 μm; und

jede Verbindungsschicht, falls vorhanden: 1,0 μm bis 5 μm, vorzugsweise 1,5 μm bis 4,5 μm, noch bevorzugter 2,0 μm bis 4,50 μm, wobei vorzugsweise beide Verbindungsschichten die gleiche Dicke aufweisen und wobei die Gesamtdicke der BOPP-Folie 8 μm bis 80 μm ist, vorzugsweise 10 μm bis 60 μm, noch bevorzugter 15 μm bis 40 μm.

**14.** Biaxial orientierte Mehrschichtfolie auf Polypropylenbasis nach einem der vorangehenden Ansprüche, wobei die Folie durch eine Einleitetemperatur der Siegelung gekennzeichnet ist, die wie im Versuchsteil beschrieben an einer BOPP-Folie mit einer Dicke von 25 μm im Bereich von 90 bis 104 °C und vorzugsweise im Bereich von 100 °C bis 104 °C bestimmt wird

**15.** Verwendung der biaxial orientierten Mehrschichtfolie auf Polypropylenbasis gemäß einem der vorangehenden Ansprüche als Verpackungsmaterial, insbesondere als Verpackungsmaterial für Lebensmittel- und/oder Nicht-Lebensmittel-Produkte wie Textilien, Blumen, Tierfutter, Reinigungsmittel und Schutzfolien für Pappkartons, die Tabakprodukte oder Parfüms enthalten.

## Revendications

**1.** Film multicouche à base de polypropylène orienté biaxialement comprenant au moins une couche centrale (CL), une première couche externe (OL1) et une seconde couche externe (OL2), dans lequel

les première et seconde couches externes (OL1) et (OL2) comprennent
70,0 à 100,0 % en poids, sur la base du poids total de la couche externe respective, d'une résine de base de terpolymère d'éthylène-propylène-1-butène catalysée par métallocène (mC2C3C4) présentant

- une teneur en éthylène (C2) mesurée par analyse par RMN $^{13}C$ (comme décrit dans la partie expérimentale) dans la plage de 0,7 à 2,0 % en poids par rapport au poids total de la résine de base mC2C3C4 ;
- une teneur en 1-butène (C4) mesurée par analyse par RMN $^{13}C$ (comme décrit dans la partie expérimentale) dans la plage de 4,0 à 7,8 % en poids par rapport au poids total de la résine de base mC2C3C4 ;
- une teneur en propylène (C3) mesurée par analyse par RMN $^{13}C$ (comme décrit dans la partie expérimentale) dans la plage de 90,2 à 96,0 % en poids par rapport au poids total de la résine de base mC2C3C4 ;

moyennant quoi les motifs dérivés de l'éthylène, du propylène et du butène totalisent 100 % en poids, et

- un indice de fluidité à chaud $MFR_2$ (230 °C / 2,16 kg), mesuré selon l'ISO 1133, dans la plage de 3,0 à 10,0 g/10 min ;
- une teneur en substances solubles dans le xylène froid (XCS) dans la plage de 2,0 à 5,0 % en poids,

déterminée à 25 °C selon l'ISO 16152, sur la base du poids total de la résine de base mC2C3C4 ;
• une température de fusion $T_m$ telle que déterminée par DSC selon l'ISO 11357 dans la plage de 120 à 129 °C ;
• une température de cristallisation $T_c$ telle que déterminée par DSC selon l'ISO 11357 dans la plage de 80 à 110 °C et
• un nombre de régio-défauts 2,1 mesuré par analyse par RMN $^{13}C$ (comme décrit dans la partie expérimentale) dans la plage de 0,10 à 1,5 % en mole et

moyennant quoi la résine de base mC2C3C4 est constituée de

(i) 30,0 à 60,0 % en poids, sur la base du poids total de la résine de base mC2C3C4, d'un premier composant polymère (TERPO-1) présentant

• un indice de fluidité à chaud $MFR_2$ (230 °C / 2,16 kg) mesuré selon l'ISO 1133 dans la plage de 1,0 à 10,0 g/10 min ;
• une teneur en éthylène (C2) mesurée par analyse par RMN $^{13}C$ (comme décrit dans la partie expérimentale) dans la plage de 0,7 à 1,3 % en poids par rapport au poids total du premier composant polymère (TERPO-1) et
• une teneur en 1-butène (C4) mesurée par analyse par RMN $^{13}C$ (comme décrit dans la partie expérimentale) dans la plage de 4,0 à 6,0 % en poids par rapport au poids total du premier composant polymère (TERPO-1) ; et

(ii) 40,0 à 70,0 % en poids, sur la base du poids total de la résine de base mC2C3C4, d'un second composant polymère (TERPO-2) présentant

• un indice de fluidité à chaud $MFR_2$ (230 °C / 2,16 kg) mesuré selon l'ISO 1133 dans la plage de 10,0 à 20,0 g/10 min ;
• une teneur en éthylène (C2) mesurée par analyse par RMN $^{13}C$ (comme décrit dans la partie expérimentale) dans la plage de 1,3 à 2,0 % en poids par rapport au poids total du second composant polymère (TERPO-2) et
• une teneur en 1-butène (C4) mesurée par analyse par RMN $^{13}C$ (comme décrit dans la partie expérimentale) dans la plage de 6,0 à 10,0 % en poids par rapport au poids total du premier composant polymère (TERPO-2) et

(iii) optionnellement un ou plusieurs additifs sélectionnés dans le groupe consistant en les agents glissants, les agents antiblocage, les stabilisants UV, les agents antistatiques, les agents d'alpha-nucléation, les antioxydants et les mélanges de ceux-ci ;

moyennant quoi la couche centrale (CL) est une couche à base de polypropylène et
moyennant quoi le film multicouche à base de polypropylène orienté biaxialement présente
une température d'initiation de scellement mesurée sur un film moulé d'essai orienté biaxialement de 25 μm comme décrit dans la partie expérimentale dans la plage de 80 à 105 °C.

2. Film multicouche à base de polypropylène orienté biaxialement selon la revendication 1, dans lequel la résine de base mC2C3C4 comprend deux fractions de polymère (TERPO-1) et (TERPO-2), moyennant quoi la fraction (TERPO-1) est présente en une quantité de 40,0 à 58,0 % en poids, de préférence de 45,0 à 55,0 % en poids, sur la base du poids total de la résine de base mC2C3C4, et la fraction (TERPO-2) est ainsi présente en une quantité de 60,0 à 52,0 % en poids, de préférence de 55,0 à 45,0 % en poids, sur la base du poids total de la résine de base mC2C3C4.

3. Film multicouche à base de polypropylène orienté biaxialement selon la revendication 1 ou 2, dans lequel la fraction (TERPO-1) de la résine de base mC2C3C4 présente une teneur en éthylène, sur la base du poids total de la fraction (TERPO-1), dans la plage de 0,7 à 1,2 % en poids, de préférence de 0,8 à 1,2 % en poids, et la fraction (TERPO-2) présente une teneur en éthylène, sur la base du poids total de la fraction (TERPO-2), dans la plage de 1,3 à 1,9 % en poids, de préférence de 1,4 à 1,9 % en poids, moyennant quoi la teneur en éthylène de la fraction (TERPO-1) est inférieure à la teneur en éthylène de la fraction (TERPO-2) et
dans lequel la teneur en 1-butène de la fraction (TERPO-1) de la résine de base mC2C3C4, sur la base du poids total de la fraction (TERPO-1), est dans la plage de 4,1 à 6,0 % en poids, de préférence de 4,1 à 5,9 % en poids, et la fraction (TERPO-2) présente une teneur en 1-butène, sur la base du poids total de la fraction (TERPO-2), dans la plage de 6,5

à 9,5 % en poids, de préférence de 7,0 à 9,0 % en poids, moyennant quoi la teneur en 1-butène de la fraction (TERPO-1) est inférieure à la teneur en éthylène de la fraction (TERPO-2).

**4.** Film multicouche à base de polypropylène orienté biaxialement selon l'une quelconque des revendications précédentes, dans lequel la fraction (TERPO-1) présente un indice de fluidité à chaud $MFR_2$ (230 °C/2,16 kg) mesuré selon l'ISO 1133 dans la plage de 2,0 à 9,5 g/10 min, de préférence de 2,5 à 9,0 g/10 min, et la fraction (TERPO-2) présente un indice de fluidité à chaud $MFR_2$ (230 °C/2,16 kg) mesuré selon l'ISO 1133 dans la plage de 10,5 à 19,0 g/10 min, de manière davantage préférée de 11,0 à 18,0 g/10 min, moyennant quoi le $MFR_2$ de la fraction (TERPO-1) est inférieur au $MFR_2$ de la fraction (TERPO-2).

**5.** Film multicouche à base de polypropylène orienté biaxialement selon l'une quelconque des revendications précédentes, dans lequel la résine de base mC2C3C4 présente

une teneur en éthylène (C2) dans la plage de 0,8 à 1,9 % en poids, de préférence de 0,9 à 1,8 % en poids et de manière davantage préférée de 1,0 à 1,8 % en poids, par rapport au poids total de la résine de base mC2C3C4 et une teneur en 1-butène (C4) dans la plage de 4,1 à 7,7 % en poids, de préférence de 4,2 à 7,6 % en poids, par rapport au poids total de la résine de base mC2C3C4.

**6.** Film multicouche à base de polypropylène orienté biaxialement selon l'une quelconque des revendications précédentes, dans lequel la résine de base mC2C3C4 présente

un indice de fluidité à chaud $MFR_2$ (230 °C / 2,16 kg) mesuré selon l'ISO 1133 dans la plage de 4,5 à 9,5 g/10 min, de préférence de 5,0 à 9,0 g/10 min et de manière davantage préférée de 5,5 à 8,5 g/10 min ou
une teneur en substances solubles dans le xylène froid (XCS) telle que déterminée selon l'ISO 16152 dans la plage de 2,5 à 4,8 % en poids, de préférence de 2,8 à 4,5 % en poids, sur la base du poids de la résine de base mC2C3C4.

**7.** Film multicouche à base de polypropylène orienté biaxialement selon l'une quelconque des revendications précédentes, dans lequel la résine de base mC2C3C4 présente

une température de fusion $T_m$ telle que déterminée par DSC selon l'ISO 11357 dans la plage de 122 à 128 °C et une température de cristallisation $T_c$ telle que déterminée par DSC selon l'ISO 11357 dans la plage de 82 à 105 °C, de préférence de 85 à 100 °C et de manière davantage préférée de 86 à 90 °C.

**8.** Film multicouche à base de polypropylène orienté biaxialement selon l'une quelconque des revendications précédentes, dans lequel les couches externes (OL1) et (OL2) consistent en la résine de base mC2C3C4 telle que définie dans l'une quelconque des revendications 1 à 7.

**9.** Film multicouche à base de polypropylène orienté biaxialement selon l'une quelconque des revendications précédentes, dans lequel la couche centrale (CL) comprend, de préférence consiste en, un homopolymère de propylène (H-PP).

**10.** Film multicouche à base de polypropylène orienté biaxialement selon la revendication 9, dans lequel l'homopolymère de propylène (H-PP) est **caractérisé par** une teneur en substances solubles dans le xylène (XCS) telle que déterminée selon l'ISO 16152 inférieure à 5,0 % en poids, de manière davantage préférée inférieure à 4,0 % en poids, de manière encore plus préférée inférieure à 3,5 % en poids et/ou une température de fusion Tm (mesurée par DSC) d'au moins 145 °C, de manière davantage préférée d'au moins 150 °C, de manière encore plus préférée d'au moins 160 °C.

**11.** Film multicouche à base de polypropylène orienté biaxialement selon l'une quelconque des revendications précédentes, dans lequel le film peut en outre comprendre une ou deux couches de liaison (TL1) et (TL2), moyennant quoi les couches de liaison optionnelles sont entre la couche centrale (CL) et une ou les deux parmi les couches externes (OL1) et/ou (OL2).

**12.** Film multicouche à base de polypropylène orienté biaxialement selon la revendication 11, dans lequel les couches de liaison (TL1) et (TL2) sont faites d'un polymère à base de polypropylène, de préférence du même polymère à base de propylène et de manière davantage préférée du même polymère à base de polypropylène que celui utilisé pour la couche centrale (CL), de manière encore plus préférée du même homopolymère de propylène que celui utilisé pour la

couche centrale (CL).

**13.** Film multicouche à base de polypropylène orienté biaxialement selon l'une des revendications précédentes, dans lequel l'épaisseur des couches après orientation biaxiale est pour chaque couche externe : de 0,3 μm à 3,0 μm, de préférence 0,4 μm à 2,0 μm, de manière davantage préférée de 0,5 μm à 1,5 μm, moyennant quoi de préférence les deux couches externes présentent la même épaisseur ;

la couche centrale : de 5 μm à 40 μm, de préférence de 10 μm à 35 μm, de manière davantage préférée de 15 μm à 25 μm ; et
chaque couche de liaison, si elles sont présentes : de 1,0 μm à 5 μm, de préférence de 1,5 μm à 4,5 μm, de manière davantage préférée de 2,0 μm à 4,50 μm, moyennant quoi de préférence les deux couches de liaison présentent la même épaisseur et moyennant quoi l'épaisseur totale du film BOPP est de 8 μm à 80 μm, de préférence de 10 μm à 60 μm, de manière davantage préférée de 15 μm à 40 μm.

**14.** Film multicouche à base de polypropylène orienté biaxialement selon l'une quelconque des revendications précédentes, dans lequel le film est **caractérisé par** une température d'initiation de scellement déterminée comme décrit dans la partie expérimentale sur un film BOPP d'une épaisseur de 25 μm dans la plage de 90 à 104 °C, et de manière davantage préférée dans la plage de 100 °C à 104 °C

**15.** Utilisation du film multicouche à base de polypropylène orienté biaxialement selon l'une quelconque des revendications précédentes, comme matériau d'emballage, en particulier comme matériau d'emballage pour des produits alimentaires et/ou non alimentaires tels que des textiles, des fleurs, des aliments pour animaux domestiques, des détergents et des films protecteurs pour boîtes en carton contenant du produit de tabac ou des parfums.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009019169 A1
- EP 20193414 A
- WO 2022167368 A
- EP 1358252 B1, Basell
- WO 2021110615 A
- WO 2022207737 A
- WO 2013007650 A1
- WO 2015158790 A2
- WO 2018122134 A1
- WO 2019179959 A
- WO 9414856 A
- WO 9512622 A
- WO 2006097497 A
- EP 0887379 A
- WO 9212182 A
- WO 2004000899 A
- WO 2004111095 A
- WO 9924478 A
- WO 9924479 A
- WO 0068315 A


### Non-patent literature cited in the description


- *Chemical Reviews*, 2000, vol. 100 (4), 1316-1327
- **KLIMKE, K.** ; **PARKINSON, M.** ; **PIEL, C** ; **KAMINSKY, W** ; **SPIESS, H.W** ; **WILHELM, M**. *Macromol. Chem. Phys.*, 2006, vol. 207, 382
- **PARKINSON, M** ; **KLIMKE, K** ; **SPIESS, H.W.** ; **WILHELM, M.** *Macromol. Chem. Phys.*, 2007, vol. 208, 2128
- **POLLARD, M.** ; **KLIMKE, K** ; **GRAF, R** ; **SPIESS, H.W** ; **WILHELM, M** ; **SPERBER, O.** ; **PIEL, C** ; **KAMINSKY, W**. *Macromolecules*, 2004, vol. 37, 813
- **FILIP, X.** ; **TRIPON, C.** ; **FILIP, C**. *J. Mag. Resn*, 2005, vol. 176, 239
- **GRIFFIN, J.M.** ; **TRIPON, C** ; **SAMOSON, A** ; **FILIP, C** ; **BROWN, S.P**. *Mag. Res. in Chem*, 2007, vol. 45 (S1), S198
- **CASTIGNOLLES, P** ; **GRAF, R** ; **PARKINSON, M** ; **WILHELM, M** ; **GABORIEAU, M**. *Polymer*, 2009, vol. 50, 2373
- **RESCONI, L.** ; **CAVALLO, L** ; **FAIT, A** ; **PIEMONTESI, F**. *Chem. Rev.*, 2000, vol. 100, 1253
- **A.J. BRANDOLINI** ; **D.D. HILLS**. NMR spectra of polymers and polymer additives. Marcel Deker Inc, 2000
- *CHEMICAL ABSTRACTS*, 7631-86-9
- *CHEMICAL ABSTRACTS*, 31570-04-4
- *CHEMICAL ABSTRACTS*, 6683-19-8
- *CHEMICAL ABSTRACTS*, 11097-59-9